**Europäisches Patentamt**

**European Patent Office**

**Office européen des brevets**

(19)

(11) Veröffentlichungsnummer: **0 504 874 A1**

# (12) EUROPÄISCHE PATENTANMELDUNG

(21) Anmeldenummer: **92104780.9**

(22) Anmeldetag: **19.03.92**

(51) Int. Cl.5: **B29B 7/76**

(30) Priorität: **21.03.91 DE 4109280**

(43) Veröffentlichungstag der Anmeldung:
**23.09.92 Patentblatt 92/39**

(84) Benannte Vertragsstaaten:
**AT BE CH DE ES FR GB IT LI NL**

(71) Anmelder: **Heiter, Lucia**
**Sommerweg 5**
**W-7951 Berkheim(DE)**

(72) Erfinder: **Heiter, Lucia**
**Sommerweg 5**
**W-7951 Berkheim(DE)**

(74) Vertreter: **Klingseisen, Franz, Dipl.-Ing. et al**
**Dr. F. Zumstein Dipl.-Ing. F. Klingseisen**
**Bräuhausstrasse 4**
**W-8000 München 2(DE)**

(54) **Mischvorrichtung zum Vermischen von Flüssigkeiten.**

(57) Bei einer Mischvorrichtung zum Vermischen von zumindest zwei Flüssigkeiten, insbesondere von reaktiven flüssigen Kunststoffmaterialien, mit getrennt in einen Mischbereich einmündenden Zuführleitungen, werden zum Erleichtern des Arbeitens der Mischvorrichtung und zur Vereinfachung der Reinigung die Zuführleitungen als Ringspalte (22,23) zwischen relativ zueinander verstellbaren Ventilelementen (4,5,6) ausgebildet. Vorzugsweise ist wenigstens der auf der Austrittsseite liegende Ringspalt (22) schräg gegen die Ausströmrichtung geneigt angeordnet. Der Mischbereich kann durch eine Räumnadel (7) in einfacher Weise mechanisch gereinigt werden.

Fig. 1

EP 0 504 874 A1

Die Erfindung betrifft eine Mischvorrichtung zum Vermischen von zwei Flüssigkeiten, insbesondere von reaktiven flüssigen Kunststoffmaterialien, mit getrennt in einen Mischbereich einmündenden Zuführleitungen.

In der Kunststoffverarbeitung sind Gegenstrom-Mischköpfe bekannt, bei denen zwei flüssige Kunststoffmaterialien in einen zentralen Mischkanal gegeneinander gerichtet einströmen und durch eine Austragsöffnung ausfließen, deren Achse in einem Winkel zu den Zuführkanälen liegt. Eine Vermischung wird im wesentlichen durch die Länge des Kanals mittels Turbulenz erreicht. Nach Abschluß des Mischvorganges muß der Mischkopf mittels Luft oder einer Reinigungsflüssigkeit von Resten des Gemisches gereinigt werden.

Der Erfindung liegt die Aufgabe zugrunde, eine Mischvorrichtung der eingangs angegebenen Art so auszubilden, daß das Arbeiten mit der Mischvorrichtung und deren Reinigung erleichtert wird.

Diese Aufgabe wird erfindungsgemäß durch die Merkmale im Anspruch 1 gelöst. Dadurch, daß die Zuführleitungen als Ringspalte zwischen relativ zueinander verschiebbaren Ventilelementen ausgebildet sind, kann durch Verschieben der Ventilelemente eine Einstellung der Ringspalte in einfacher Weise vorgenommen werden. In gleicher Weise können die Ringspalte geschlossen werden, so daß die verbleibende, den Mischbereich bildende Leitung durch ein mechanisches Reinigungselement gereinigt werden kann.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen:

Fig. 1    in einem Längsschnitt eine in eine Spritzeinrichtung zum Auftragen von Kunststoffgemischen eingebaute Mischvorrichtung,

Fig. 2    einen Querschnitt längs der Linie X-Y in Fig. 1, und

Fig. 3    in einem Längsschnitt eine abgewandelte Ausführungsform der Mischvorrichtung.

Mit 1 ist das Gehäuse der Mischvorrichtung bezeichnet, das bei dem dargestellten Ausführungsbeispiel einen Spritzkopf für eine Einrichtung zum Auftragen eines Kunststoffgemisches in einer offenen, beispielsweise wannenförmigen, nicht dargestellten Form wiedergibt. Das Gehäuse 1 ist im wesentlichen mit einer durchgehenden Bohrung versehen, in der die Mischvorrichtung angeordnet ist und an deren ausgangsseitigem Ende ein Einsatzteil 2 eingesetzt ist, das über einen Absatz am Gehäuse 1 gegenüber der Mischvorrichtung abgestützt ist. Dieses Einsatzteil 2 ist mit einer Austrittsleitung 21 in Form einer durchgehenden glatten Bohrung versehen. Vorzugsweise ist dieses Einsatzteil 2 über ein nicht dargestelltes Gewinde axial einstellbar im Gehäuse 1 angeordnet. Bei 12 ist ein Umlenkteil wiedergegeben, mittels dem das aus der Austrittsleitung 21 austretende Gemisch beispielsweise in Form eines breiten Strahles umgelenkt wird. Mittels eines derartigen Spritzkopfes können hochreaktive Kunststoffgemische in eine offene Form schichtförmig eingebracht werden.

Das Einsatzteil 2 bildet einen vorzugsweise einstellbaren Anschlag für ein Ventilelement 3 der Mischvorrichtung, das einen kegelstumpfförmigen Abschnitt und einen zylindrischen Abschnitt aufweist. Auf dem zylindrischen Abschnitt des Ventilelementes 2 ist eine Dichtung angeordnet, die zwischen Innenumfang der Gehäusebohrung und Außenumfang des Ventilelementes 3 abdichtet, jedoch eine Axialverschiebung des Ventilelementes 3 zuläßt. Der kegelstumpfförmige Abschnitt des Ventilelementes 3 bildet mit seiner Kegelmantelfläche die Begrenzung eines kegelförmigen Ringspaltes 22, der auf der gegenüberliegenden Seite durch eine komplementäre Kegelmantelfläche eines Ventilringes 4 begrenzt wird, der auf dem Außenumfang Dichtungen aufweist, die am Innenumfang der Gehäusebohrung dichtend anliegen, eine axiale Verschiebung des Ventilringes 4 in der Gehäusebohrung aber zulassen. Dieser Ventilring 4 weist auf der gegenüberliegenden Seite eine entsprechende Kegelmantelfläche auf, die einen kegelförmigen Ringspalt 23 auf einer Seite begrenzt, wobei die andere Seite durch eine Kegelmantelfläche eines Ventilelementes 5 begrenzt wird, das in der Gehäusebohrung verschiebbar angeordnet und wie die anderen Ventilelemente auf dem Außenumfang mit Dichtungen versehen ist. Diese die Mischvorrichtung bildenden Ventilelemente 3, 4 und 5 sind koaxial zueinander angeordnet und sie weisen jeweils eine durchgehende Bohrung auf. Vorzugsweise fluchtet diese Bohrung zumindest im Ventilelement 3 mit der Austrittsleitung 21. Die im Ventilring 4 vorgesehene mittige Bohrung bildet eine Mischkammer 11, in die in einem spitzen Winkel zur Achse dieser Bohrung die beiden Zuführleitungen 22 und 23 gegeneinander gerichtet einmünden. In der durch das Ventilelement 5 führenden mittigen Bohrung ist eine Räumnadel 7 verschiebbar geführt, mittels der die Mischkammer 11 nach Beendigung des Mischvorganges gereinigt werden kann, wobei die Räumnadel 7 vorzugsweise bis zum Außenende der Austrittsleitung 21 verschiebbar ist.

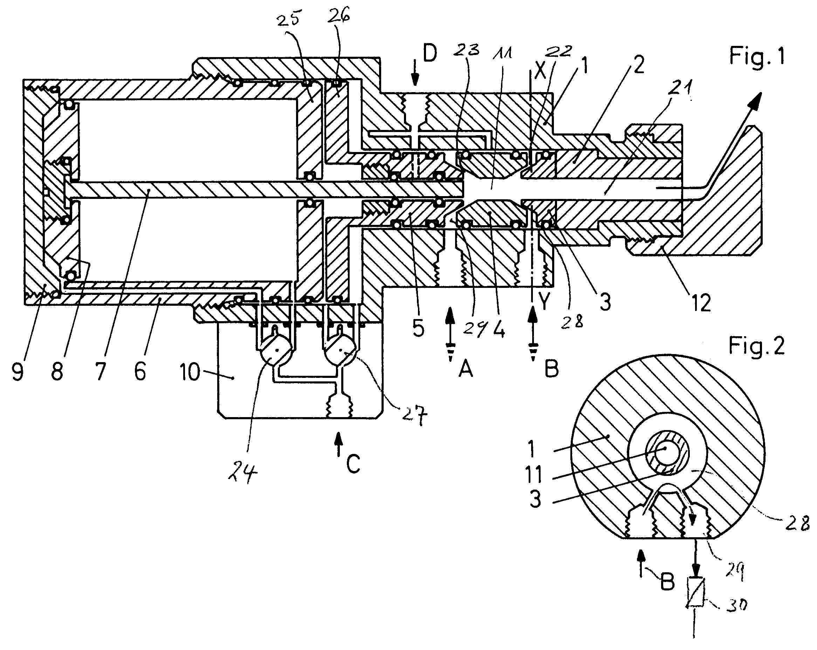

Das hintere Ende der Räumnadel 7 ist mit einem Kolben 8 verbunden, der in einem Zylinder 6 verschiebbar ist und über ein Ventil 24 in einem Ventilblock 10 auf beiden Seiten mit Druck beaufschlagt werden kann, um die Räumnadel 7 nach vorne und zurück zu bewegen. Der Kolben 8 liegt an einem eingeschraubten Zylinderdeckel 9 an, mittels dem der Anschlag für die Rückstellbewegung der Räumnadel 7 verstellbar ist. Der Zylinder 6 ist in das Gehäuse 1 eingeschraubt und er bildet mit der innen liegenden Stirnwand 25 einen Anschlag für das Ventilelement 5, das bei dem dargestellten Ausführungsbeispiel mit einem Kolbenabschnitt 26 versehen ist, der in der den Zylinder 6 aufnehmenden Gehäusebohrung verschiebbar ist und über ein Ventil 27 auf beiden Seiten mit Druck beaufschlagt werden kann, um das Ventilelement 5 in Fig. 1 nach rechts und zurück in die dargestellte Stellung zu verschieben. Die Stirnwand 25 des Zylinders 6 bildet dabei einen Anschlag für das Ventilelement 5 in der in Fig. 1 dargestellten Spritzstellung, wobei durch Verdrehen des Zylinders 6 im Gehäuse 1 der Anschlag 25 verstellt und damit die Öffnungsweite der kegelförmigen Ringkanäle 22, 23 entsprechend der in die Mischkammer 11 zuzuführenden Menge einstellbar ist.

In der dargestellten Spritzstellung, in der das Ventilelement 5 am Anschlag 25 und das Ventilelement 3 am Einsatzteil 2 anliegt, ergibt sich die Stellung des dazwischenliegenden Ventilringes 4 durch die über die Anschlüsse A und B zugeführten flüssigen Komponenten bzw. deren Druck. Da der Ventilring 4 frei beweglich in der Gehäusebohrung angeordnet ist, kann er sich in Abhängigkeit von dem Druck in den einander gegenüberliegenden kegelförmigen Ringspalten 22 und 23 frei einstellen. Durch Druckbeaufschlagung des Kolbenteils 26 am Ventilelement 5 auf der linken Seite kann das Ventilelement 5 nach rechts in Fig. 1 verschoben werden, so daß die beiden Ringspalte 22 und 23 durch Ineinanderschieben der Ventilelement 3, 4 und 5 abgesperrt werden.

Durch Einstellen des Anschlags 25 und gegebenenfalls des Anschlags 2 kann die Geschwindigkeit der einströmenden Komponenten eingestellt werden. Durch das Gegeneinanderströmen der beiden Komponenten in der Mischkammer 11 und das Ausströmen des Gemisches aus der Mischkammer 11 entgegen einer Einströmrichtung ergibt sich in der Mischkammer 11 eine sehr intensive Vermischung der beiden Komponenten. Durch eine Vergrößerung der Ringspalte 22 und 23 ergibt sich auch eine Vergrößerung der Mischkammer 11.

Werden die gegeneinander gerichteten kegelförmigen Ringspalte 22 und 23 in ihrem Querschnitt verkleinert, so kann die Einspritzgeschwindigkeit der an den Anschlüssen A und B zugeführten Komponenten erhöht werden, ohne daß die Minimalgröße der Mischkammer 11 nennenswert beeinflußt wird.

Die kegelförmigen Ringspalte 22 und 23 sind in der Weise durch eine Kegelstumpfmantelfläche an den Ventilelementen 3, 4 und 5 ausgebildet, daß sich auf der Außenseite der kegelstumpfförmigen Ringspalte 22 und 23 im geschlossenen Zustand der Mischvorrichtung jeweils ein Ringraum 28 bzw. 29 bildet. Dies wird dadurch erreicht, daß sich an die Kegelmantelflächen jeweils eine sich radial zur Längsachse erstreckende Stirnfläche anschließt, wobei die einander gegenüberliegenden Stirnflächen der Ventilelemente 3 und 4 sowie 4 und 5 bei geschlossenen Ringspalten 22 und 23 diese Ringräume 28 und 29 bilden.

Fig. 2 zeigt einen Querschnitt längs der Linie X-Y in Fig. 1, wobei davon ausgegangen wird, daß der Ringspalt 22 durch Aneinanderliegen der ihn begrenzenden Kegelmantelflächen geschlossen ist. Der verbleibende Ringraum 28 ist mit dem Anschluß B verbunden, wobei dieser Ringraum 28 mit einer zweiten Anschlußleitung 29 verbunden ist, die an ein Überdruckventil 30 angeschlossen ist. Das Überdruckventil 30 ist auf einen höheren Druck als den Spritzdruck, bei dem der Mischvorgang stattfindet, eingestellt. Bei geschlossenem Ringspalt 22 fließt die bei B zugeführte Komponente über den Ringraum 28 zurück in den Anschluß 29, wobei in diesem Falle das Überdruckventil 30 öffnet und eine Rezirkulation der flüssigen Komponente stattfindet, wie durch Pfeile in Fig. 2 angedeutet. Auf diese Weise kann bei Unterbrechung des Mischvorganges durch Schließen der Ringspalte 22 und 23 ein Erstarren des Materials in der Zuführleitung verhindert werden.

Am Anschluß A ist die gleiche Ausgestaltung wie in Fig. 2 vorgesehen. Das Überdruckventil 30 ist beispielsweise mit einem Tank verbunden, aus dem die betreffende Komponente zum Anschuß B geleitet wird.

Nach Beendigung eines Mischvorganges werden zunächst die Ringspalte 22 und 23 dadurch geschlossen, daß der Kolbenansatz 26 des Ventilelementes 5 auf der linken Seite mit hydraulischem Druck beaufschlagt wird, worauf nach Schließen der Ringspalte 22 und 23 durch Beaufschlagen des Kolbens 8 die Mischkammer 11 und die Austrittsleitung 21 mittels der Räumnadel 7 mechanisch gereinigt wird, so daß eine Reinigung mittels einer Reinigungsflüssigkeit entfällt.

Der Ventilblock 10 ist mit einem Anschluß bei C für eine unter Druck stehende Flüssigkeit versehen, wobei die beiden Ventile 24 und 27 nacheinander angesteuert werden. Zwischen Räumnadel 7 und Ventilelement 5 bzw. Stirnwand 25 des Zylinders 6 sind entsprechende Dichtungen vorgesehen, wie auch auf dem Außenumfang des Zylinders 6 und des Kolbenansatzes 26.

Die Räumnadel 7 kann auch mehrmals hintereinander betätigt werden. Ferner ist auch eine Betätigung bei offenen Ringspalten 22 und 23 möglich.

Es sind verschiedene Abwandlungen der beschriebenen Bauweise möglich. So kann bei D ein Anschluß für ein Gleitmittel vorgesehen werden, von dem aus die Gleitfläche an dem schwimmend gelagerten Ventilring 4 und das Ventilelement 5 auf dem Innen- und Außenumfang mit Gleitmittel versorgt wird.

Es ist auch möglich, den Winkel der gegeneinander gerichteten kegelförmigen Ringspalte 22 und 23, der bei dem dargestellten Ausführungsbeispiel etwa 60° gegen die Achse der Austrittsleitung 21 beträgt, anders auszulegen. Die beiden Ringspalte 22 und 23 können auch senkrecht in den Leitungsabschnitt 11 münden, jedoch wird dadurch die Durchmischung der beiden Komponenten nicht begünstigt, während sich nach wie vor der Vorteil ergibt, daß die beiden Ringspalte in einfacher Weise durch Gegeneinanderverschieben geschlossen und in ihrer Öffnungsweite durch die Anschläge eingestellt werden können. Vorzugsweise wird der Winkel der gegeneinander gerichteten kegelförmigen Ringspalte so ausgelegt, daß sich die Verlängerungslinien der Ringspalte in der Mitte des Leitungsabschnitts 11 treffen. Dies wird auch dadurch erreicht, daß die beiden Ringspalte unter einem größeren Winkel gegeneinander angestellt werden. Beispielsweise kann der Winkel zwischen Ringspalt und Leitungsachse im Bereich von 30 bis 80° liegen, bevorzugt in einem Bereich von 45 bis 60°. Es ist aber auch möglich, die Ausrichtung der beiden Ringspalte unterschiedlich voneinander auszulegen. So kann beispielsweise der Ringspalt 23 senkrecht in den Leitungsabschnitt 11 münden, während der Ringspalt 22 in der dargestellten Weise entgegen der Ausströmrichtung angestellt ist. Bereits durch diese Maßnahme wird die Vermischung wesentlich verbessert.

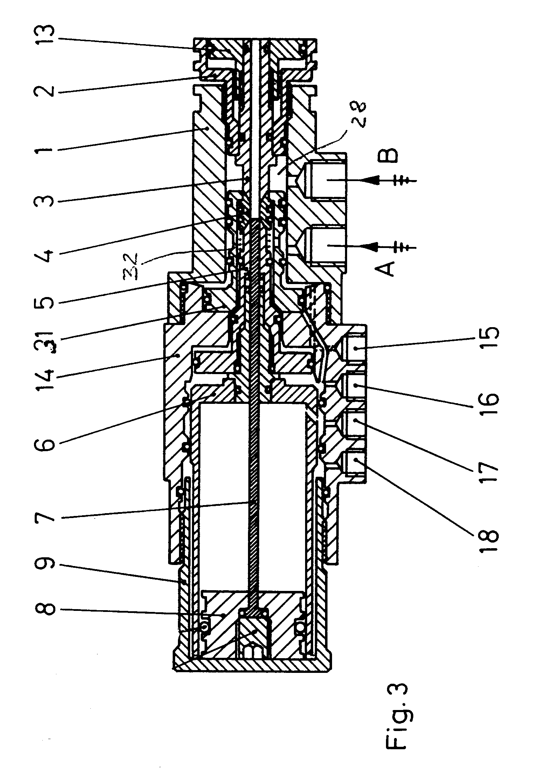

Fig. 3 zeigt eine abgewandelte Ausführungsform in der Schließstellung der Ringspalte, wobei für gleiche bzw. entsprechende Bauteile die gleichen Bezugszeichen wie in Fig. 1 verwendet sind.

Der Ventilring 4 ist auf dem Außenumfang mit einem rohrförmigen Ansatz versehen, der in einem Kolbenteil 31 endigt, das an einem am Gehäuse 1 ausgebildeten Anschlagteil 14 in der dargestellten Stellung anliegt. Dieses Gehäuseteil 14 bildet mit dem Gehäuseteil 1 eine Zylinderkammer für den Kolbenansatz 31, der über die Anschlüsse 15 und 16 auf gegenüberliegenden Seiten mit Druckmittel beaufschlagbar ist, so daß der Ventilring 4 hydraulisch in seiner Stellung in Achsrichtung zwischen den Ventilelementen 3 und 5 eingestellt werden kann. Bei dem dargestellten Ausführungsbeispiel ist der rohrförmige Ansatz mit einer radialen Durchbrechung für den Durchtritt der Komponente A versehen. Ein radial nach innen ragender Absatz des rohrförmigen Ansatzes hintergreift eine Ringschulter am Ventilelement 4, so daß das Ventilelement 4 durch den Kolbenteil 31 nach links entgegen der Kraft einer Feder 32 verschoben werden kann, während bei Bewegung des Kolbenteils 31 nach rechts das Ventilelement 4 durch die Feder 32 verschoben wird.

Ferner ist in Fig. 3 das Einsatzteil 2 rohrförmig ausgebildet, wobei das Ventilelement 3 sich durch das Einsatzteil 2 erstreckt und am Außenende mit einem Kolbenansatz 13 versehen ist, der in der gleichen Weise für eine hydraulische Verstellung des Ventilelementes 3 dient. Hierbei ist die Ringkammer 28 bei geschlossenen kegelstumpfförmigen Ringspalten 22 und 23 größer ausgebidet als bei der Ausführungsform nach Fig. 1.

Das Ventilelement 5 ist bei der Ausführungsform nach Fig. 3 in gleicher Weise wie bei der Ausführungsform nach Fig. 1 hydraulisch verstellbar, so daß sämtliche Ventilelemente der Mischvorrichtung hydraulisch relativ zueinander eingestellt werden können.

Eine weitere Abwandlung ist in Fig. 3 dadurch vorgeseen, daß der Zylinderdeckel 9 kappenförmig ausgebildet und in der Bohrung des Gehäuseteils 14 geführt ist. Bei 17 und 18 sind Anschlüsse vorgesehen, die den Anschlüssen des Ventils 24 in Fig. 1 entsprechen.

Es kann auch eine Ausgestaltung vorgesehen werden, bei der mehr als zwei Komponenten miteinander vermischt werden können. Dies kann durch Hintereinanderschalten der beschriebenen Mischvorrichtung in einer Austrittsleitung erreicht werden. Vorzugsweise wird eine dritte Komponente ebenfalls in Achsrichtung gegen die Ausströmrichtung in einem spitzen Winkel zur Längsachse eingeführt, wie dies bei dem kegelförmigen Ringspalt 22 der Fall ist.

Bei einem praktischen Ausführungsbeispiel werden Polyol und Isocyanat in flüssiger Form in die Mischkammer bei einem Druck von 100 bis 200 bar eingeleitet. Diese beiden Komponenten sind hochreaktiv und verfestigen sehr schnell, so daß sie mit dem in Fig. 1 wiedergegebenen Spritzkopf zur Ausbildung einer stabilen Schicht in eine offene, wannenförmige Form eingebracht werden können. Die beiden Komponenten können in einem Verhältnis von 2 : 1 an den Anschlüssen A und B zugeführt werden, wobei die Dosierung durch eine nicht dargestellte Einrichtung außerhalb des Spritzkopfes vorgenommen wird. Das Umlenkelement 12 ist über ein Gewinde auf das Gehäuse 1 aufgeschraubt, um den austretenden Strahl veränderbar zu gestalten.

Die einzelnen Ventilelemente 3, 4 und 5 können auch durch nicht dargestellte Federelemente beaufschlagt sein, welche die Ventilelemente relativ zueinander vorspannen, wie dies in Fig. 3 bei 32 angedeutet ist, wobei eine Feder zwischen den Ventilelementen 4 und 5 vorgesehen ist.

Die einzelnen Bauteile der Mischvorrichtung können aus Metall oder Kunststoff ausgebildet sein.

Anstelle der Dichtungen können die Ventilelemente 3, 4, 5 an den Gleitflächen auch auf Passung gearbeitet sein.

**Patentansprüche**

1. Mischvorrichtung zum Vermischen von zumindest zwei Flüssigkeiten, insbesondere von reaktiven flüssigen Kunststoffmaterialien, mit getrennt in einen Mischbereich einmündenden Zuführleitungen,
**dadurch gekennzeichnet,**
daß die Zuführleitungen als Ringspalte (22,23) zwischen relativ zueinander verstellbaren Ventilelementen (3, 4, 5) ausgebildet sind.

2. Mischvorrichtung nach Anspruch 1,
dadurch gekennzeichnet,
daß die Ventilelemente (4,5,6) ringförmig ausgebildet sind und durch ihre koaxialen Bohrungen einen Leitungsabschnitt (11) bilden, der mit einer Austrittsleitung (12) fluchtet.

3. Mischvorrichtung nach den Ansprüchen 1 und 2,
dadurch gekennzeichnet,
daß eine Räumnadel (7) koaxial zu den Ventilelementen (3,4,5) verschiebbar angeordnet ist.

4. Mischvorrichtung nach den vorgehenden Ansprüchen,
dadurch gekennzeichnet,
daß wenigstens der auf der Austrittsseite liegende Ringspalt (22) schräg gegen die Ausströmrichtung geneigt angeordnet ist.

5. Mischvorrichtung nach Anspruch 4,
dadurch gekennzeichnet,
daß die beiden Ringspalte (22,23) gegeneinander gerichtet angeordnet sind.

6. Mischvorrichtung nach den vorhergehenden Ansprüchen,
dadurch gekennzeichnet,
daß das mittlere Ventilelement (4) frei beweglich zwischen den beiden äußeren Ventilelementen (3,5) angeordnet ist, wobei wenigstens eines der äußeren Ventilelemente (3,5) in seiner Öffnungsstellung einstellbar ist.

7. Mischvorrichtung nach den vorhergehenden Ansprüchen,
dadurch gekennzeichnet,
daß wenigstens eines der äußeren Ventilelemente (3,5) an einem Anschlag (2,25) anliegt, der in Achsrichtung einstellbar ist.

8. Mischvorrichtung nach den vorhergehenden Ansprüchen,
dadurch gekennzeichnet,
daß zumindest eines der Ventilelemente (3,4,5) hydraulisch verstellbar ausgebildet ist.

9. Mischvorrichtung nach den vorhergehenden Ansprüchen,
dadurch gekennzeichnet,
daß die Räumnadel (7) durch eine hydraulische Betätigungseinrichtung (8) durch die Ventilelemente (3,4,5) vor- und zurückverschiebbar ist.

10. Mischvorrichtung nach den vorhergehenden Ansprüchen,
dadurch gekennzeichnet,
daß bei geschlossenen Ringspalten (22,23) ein Hohlraum (28) vorgesehen ist, durch den die eingespritzte Flüssigkeit rezirkuliert werden kann.

Fig.1

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 416 780 (HERBST)<br>* Seite 5, Absatz 2 - Seite 6, Absatz 1; Abbildungen *<br>--- | 1,2 | B29B7/76 |
| A | US-A-3 876 145 (GUSMER)<br>* Abbildungen *<br>--- | 1-10 | |
| A | US-A-3 144 210 (LEVY)<br><br>----- | | |

**RECHERCHIERTE SACHGEBIETE (Int. Cl.5)**

B01F
B29B

Der vorliegende Recherchenbericht wurde für alle Patentansprüche erstellt

| Recherchenort | Abschlußdatum der Recherche | Prüfer |
|---|---|---|
| DEN HAAG | 02 JULI 1992 | PEETERS S. |